# EUROPÄISCHE PATENTSCHRIFT

(11) **EP 1 790 872 B1**
(45) Veröffentlichungstag und Bekanntmachung des Hinweises auf die Patenterteilung: **11.03.2009**
(21) Anmeldenummer: 06024373.0
(22) Anmeldetag: 24.11.2006
(51) Int. Cl.: F16D 65/18

(54) **Scheibenbremse, insbesondere für ein Nutzfahrzeug**
Disc brake for a utility vehicle.
Frein à disque pour une véhicule utilitaire.

(30) Priorität: 24.11.2005 DE 102005056065
(43) Veröffentlichungstag der Anmeldung: 30.05.2007
(73) Patentinhaber: KNORR-BREMSE SYSTEME FÜR NUTZFAHRZEUGE GMBH, 80809 München (DE)
(72) Erfinder: Wimmer, Josef, 94474 Vilshofen (DE)
(74) Vertreter: Mattusch, Gundula

(56) Entgegenhaltungen:
- EP-A2- 1 318 322
- DE-A1- 4 215 200
- DE-A1- 10 236 606

## Beschreibung

Die vorliegende Erfindung betrifft eine Scheibenbremse, insbesondere für ein Nutzfahrzeug, gemäß dem Oberbegriff des Anspruchs 1.

Bei einer derartigen Scheibenbremse wird die Zuspanneinrichtung beispielsweise pneumatisch betätigt, das heißt, die Zuspannkraft wird über einen mit dem Drehhebel in Wirkverbindung stehenden pneumatisch beaufschlagten Bremszylinder erzeugt. Prinzipiell kann die Zuspannkraft auch hydraulisch oder elektromechanisch aufgebracht werden.

Um eine ausreichende, auf die Bremsscheibe wirkende Bremskraft zu erzielen, dient der Drehhebel als mechanische Übersetzung, wobei sich einerseits der Exzenter an einem Lagersitz des Bremssattels gleitend abstützt, während andererseits der Drehhebel an einer bewegbaren Brücke anliegt, in der Stellspindeln angeordnet sind, die mit einem gegen eine Bremsscheibe pressbaren Bremsbelag in Wirkverbindung stehen.

Beim Verschwenken des Drehhebels gleitet der Exzenter entlang der kreisbogenförmigen Bahn des Lagersitzes unter Verschiebung der Brücke in Richtung der Bremsscheibe.

Zur Minimierung der Reibung zwischen dem Exzenter und dem Lagersitz sind zwischen beiden Wälzlagerungen vorgesehen, die vorzugsweise aus einem Nadel-, Zylinderrollen- oder Kugellager bestehen.

Für ein einwandfreies Abrollen der Wälzlager muss der Exzenter des Bremshebels entsprechend bearbeitet werden.

Eine solche Bearbeitung des üblicherweise Gesenk geschmiedeten Drehhebels erfolgt durch Zerspanen, wie Drehen, Schleifen oder dergleichen, was naturgemäß nur mit einem entsprechend kostenintensiven hohen Aufwand möglich ist.

Um eine ausreichend hohe Verschleißfestigkeit der Wälzlagerlaufflächen sowie von Nachstellstiften, die Bestandteil des Drehhebels sind und die mit einer Nachstelleinrichtung korrespondieren, mit der ein betriebsbedingter Bremsscheibenverschleiß ausgleichbar ist, zu erhalten, wird der Drehhebel gehärtet.

Eine Scheibenbremse ist aus der DE 102 36 606 A1 bekannt. Darin wird vorgeschlagen, den Exzenter mit einer Ausnehmung zu versehen, in die eine Lagerpfanne eingreift, mit einem Käfigrückholer, durch den das Wälzlager in eine Ausgangsstellung bringbar ist.

Die DE 10236606 offenbart eine Scheibenbremse gemäß dem Oberbegriff des Anspruchs 1.

Da solche Scheibenbremsen als Großserienteile in hohen Stückzahlen hergestellt werden, kommt einer rationellen und damit kostengünstigen Herstellung eine besondere Bedeutung zu, der die genannte aufwendige Bearbeitung des Drehhebels entgegensteht.

Der Erfindung liegt daher die Aufgabe zugrunde, eine Scheibenbremse der gattungsgemäßen Art so weiter zu entwickeln, dass sie einfacher und kostengünstiger herstellbar und montierbar ist.

Diese Aufgabe wird durch eine Scheibenbremse mit den Merkmalen des Anspruchs 1 gelöst.

Durch diese konstruktive Ausbildung werden eine ganze Reihe von Vorteilen erzielt, die den Anforderungen an eine wirtschaftliche Fertigung gerecht werden und zu einer Herstellungsoptimierung führen.

So wird zunächst einmal der Schmiedeprozess, bei dem der Drehhebel als Grundelement gefertigt wird, vereinfacht, da die Nachstellstifte, die bislang aufwendig im Gesenk angeschmiedet wurden, nunmehr, nach einer vorteilhaften Weiterbildung der Erfindung, Bestandteil der separaten Lagerschale sind.

Darüber hinaus ist ein Härten des geschmiedeten Drehhebels nicht mehr erforderlich, da durch entsprechende Materialauswahl der Lagerschalen die notwendige Verschleißfestigkeit erreicht werden kann.

Des weiteren ist eine mechanische Bearbeitung des geschmiedeten Drehhebels nicht mehr erforderlich. Vielmehr können die Lagerschalen, beispielsweise in einem Schmiedeprozess durch Warm-Kalt-Kalibrieren in ihrer Geometrie und Passgenauigkeit so hergestellt werden, dass sich eine nachträgliche mechanische Bearbeitung erübrigt.

Vorzugsweise sind die Lagerschalen mit dem Exzenter des Drehhebels formschlüssig verbunden, beispielsweise durch Verrastung, wobei hierzu an der Lagerschale Rastnasen angeformt sein können, die mit entsprechenden Aufnahmen des Exzenters korrespondieren.

Eine besonders einfache Herstellung der Lagerschalen ergibt sich dann, wenn diese als Blechformteile, vorzugsweise als Biege-Stanzteile ausgebildet sind, wobei bei diesem Fertigungsvorgang gleichzeitig Rückholelemente angeformt werden können, mit denen Wälzlagerkäfige zurückholbar sind. Auf separate Rückholelemente, wie sie bislang erforderlich waren, kann somit verzichtet werden, was ebenfalls zu einer Kostenminimierung beiträgt.

Insgesamt ist festzuhalten, dass ein im Sinne der Erfindung ausgebildeter Drehhebel eine bemerkenswerte Verbesserung gegenüber dem Stand der Technik darstellt, insbesondere hinsichtlich einer kostengünstigen Herstellung.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

### Es zeigen:

- Figur 1: einen Teilausschnitt einer erfindungsgemäßen Scheibenbremse in einer geschnittenen Seitenansicht
- Figuren 2 u. 3: eine Einzelheit der Scheibenbremse, jeweils in einer perspektivischen Ansicht

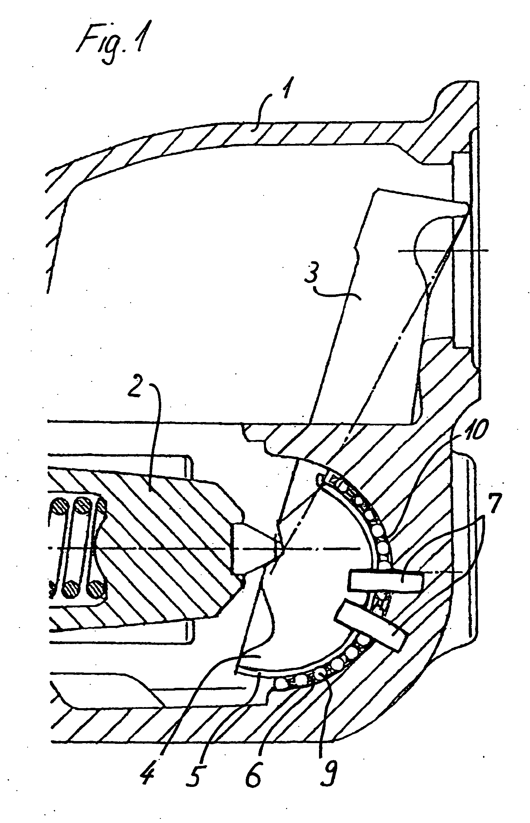

In der Figur 1 ist ein Teil einer Scheibenbremse, insbesondere für ein Nutzfahrzeug gezeigt, mit einem eine nicht dargestellte Bremsscheibe umfassenden Bremssattel 1 und einer Zuspanneinrichtung, die einen Drehhebel 3 aufweist.

Integraler Bestandteil dieses Drehhebels 3 ist ein Exzenter 4, der an einer Brücke 2 angreift, die axial verschiebbar gelagert ist und über die ein ebenfalls nicht dargestellter Bremsbelag bei Betätigung der Zuspanneinrichtung an die Bremsscheibe andrückbar ist.

Auf seiner der Brücke 2 abgewandten Seite ist der Exzenter 4 beidseitig des Drehhebels 3 kreisbogenförmig ausgebildet und stützt sich jeweils in einem Lagersitz des Bremssattels 1 ab, der der zugeordneten Außenkontur des Exzenters 4, also der Kreisbogenform angepasst ist.

Zwischen dem Exzenter 4 und dem Lagersitz 10 sind Wälzlager 9, bestehend aus einer Vielzahl von Kugeln angeordnet, die in einem Lagerkäfig 6 gehalten sind und die sich einerseits am Lagersitz 10 des Bremssattels 1 und andererseits an Lagerschalen 5 des Exzenters 4 abstützen.

Diese Lagerschalen 5 bestehen aus Blechformteilen und sind mittels Rastnasen 11 formschlüssig am Exzenter 4 befestigt.

Weiter sind an einer der beiden Lagerschalen, die beidseitig des Drehhebels 3 an den entsprechenden Exzenterflächen anliegen, Nachstellerstifte 7 angeformt, die mit einer Nachstelleinrichtung korrespondieren, mit der bei jeder Betätigung der Zuspanneinrichtung das sich durch Bremsbelagverschleiß und dergleichen veränderte Lüftspiel korrigiert.

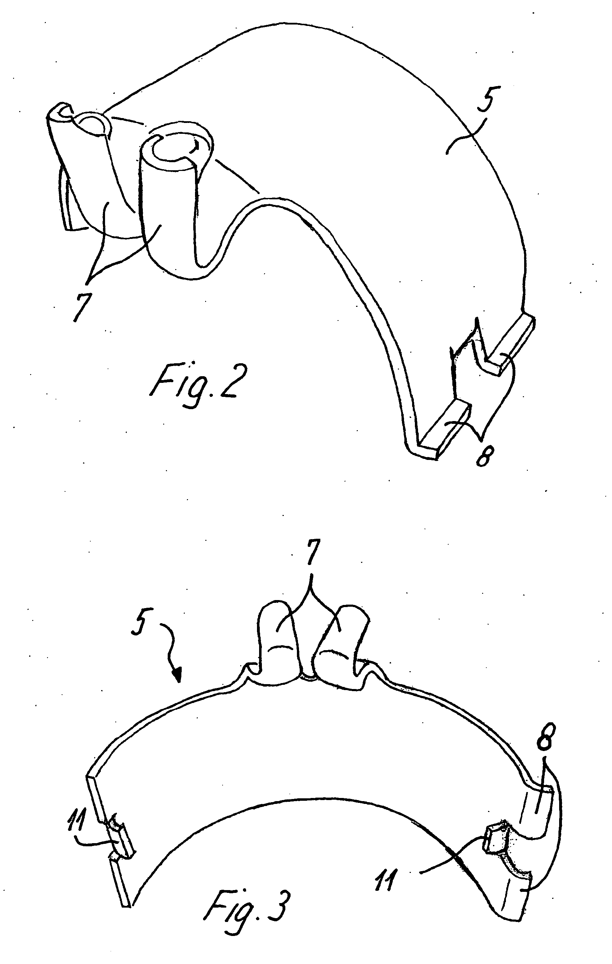

Dabei sind die Nachstellerstifte 7, wie insbesondere die Figur 2 sehr deutlich wiedergibt, an einer Seite einer Lagerschale 5 angeformt und erstrecken sich radial nach außen.

Prinzipiell können die Lagerschalen 5 in wechselseitiger Ausführung mit dem Drehhebel 3 verrastet sein, wodurch die Position einer Nachstelleinrichtung variabel ist.

Durch den Einsatz der Lagerschalen 5 beidseitig am Drehhebel 3 besteht die Möglichkeit zwei Nachstelleinrichtungen anzutreiben, wodurch dann bislang erforderliche Bauteile, wie eine Antriebskette, Zahnräder oder dergleichen entfallen können. Weiter ist ohne zusätzliche konstruktive und bauliche Maßnahmen eine synchrone Verstellung von üblicherweise paarweise angetriebenen Nachstellspindeln möglich, woraus sich insgesamt eine bauliche Vereinfachung ergibt.

Zur Rückführung des Wälzlagers 9 beim Zurückschwenken des Drehhebels 3 in eine Nichtfunktionsstellung, wie sie in der Figur 1 gezeigt ist, sind an einer der beiden Seiten der Lagerschalen 5 Rückholer 8 in Form von abgewinkelten Laschen vorgesehen, die in Funktionsstellung am Lagerkäfig 10 anliegen.

Diese Rückholer 8 sind ebenso wie die Nachstellerstifte 7 und die Rastnase 11 durch spanlose Formgebung, beispielsweise durch Biegen an die Lagerschale 5 angeformt.

Zur Anlage der Rückholer 8 am Lagerkäfig 10 sind die Rückholer 8 sich in radialer Richtung nach außen, das heißt in Richtung der konvexen Seite der Lagerschale 5 verlaufend.

Anstelle der genannten formschlüssigen Festlegung der Lagerschalen 5 an dem jeweils zugeordneten Exzenterbereich besteht auch die Möglichkeit der stoffschlüssigen Verbindung, beispielsweise durch Verkleben, Verlöten oder dergleichen. Denkbar sind auch Formschlussverbindungen, die abweichend von der Raumform der Rastnasen 11 durch andere Rastmittel mit dem zugeordneten Exzenterbereich verbunden sind.

## Patentansprüche

1. Scheibenbremse, insbesondere für ein Nutzfahrzeug, mit mindestens einer, in einem Bremssattel (1) angeordneten Zuspanneinrichtung, mit der bei einer Bremsung ein Bremsbelag an eine Bremsscheibe drückbar ist und die einen schwenkbaren, an einem Ende als Exzenter (4) ausgebildeten Drehhebel (3) aufweist, wobei sich der Exzenter (4) mittels mindestens eines Wälzlagers (9), das über einen Käfigrückholer (8) des Drehhebels in eine Ausgangsstellung bringbar ist, an einem Lagersitz (10) des Bremssattels (1) als Widerlager abstützt, **dadurch gekennzeichnet, dass** der Exzenter (4) im Anlagebereich mit dem Wälzlager (9) mindestens eine separate Lagerschale (5) aufweist.

2. Scheibenbremse nach Anspruch 1, **dadurch gekennzeichnet, dass** jede Lagerschale (5) als Blechformteil ausgebildet ist.

3. Scheibenbremse nach Anspruch 1 oder 2, **dadurch gekennzeichnet, dass** jede Lagerschale (5) form- oder stoffschlüssig mit dem Exzenter (4) verbunden ist.

4. Scheibenbremse nach einem der vorhergehenden Ansprüche, **dadurch gekennzeichnet, dass** die Lagerschale (5) mit dem Exzenter (4) verklebt oder verlötet ist.

5. Scheibenbremse nach einem der vorhergehenden Ansprüche, **dadurch gekennzeichnet, dass** an die Lagerschale (5) Rastnasen (11) angeformt sind, die verrastend in den Exzenter (4) eingreifen.

6. Scheibenbremse nach einem der vorhergehenden Ansprüche, **dadurch gekennzeichnet, dass** an die Lagerschale (5) Nachstellerstifte (7) angeformt sind, die mit einer Nachstelleinrichtung korrespondieren.

7. Scheibenbremse nach einem der vorhergehenden Ansprüche, **dadurch gekennzeichnet, dass** zur Rückholung eines Wälzlagerkäfigs (10) Rückholer (8) angeformt sind.

8. Scheibenbremse nach Anspruch 7, **dadurch gekennzeichnet, dass** die Rückholer (8) als in Richtung der Wälzlager (9) abgewinkelte Laschen ausgebildet sind.

9. Scheibenbremse nach einem der vorhergehenden Ansprüche, **dadurch gekennzeichnet, dass** jede Lagerschale (5) durch Warm-Kalt-Kalibrieren geformt ist.

## Claims

1. Disc brake, in particular for a commercial vehicle, comprising a brake applicator means disposed in a brake calliper (1), by means of which a brake lining may be pressed against a brake disc in the case of brake application, and a pivotable rotary lever (3) having one end configured as eccentric (4), wherein said eccentric (4) is supported as abutment on a bearing seat (10) of said brake calliper (1) by means of at least one antifriction bearing (9) adapted to be moved via a cage restoring means (8) of said rotary lever, **characterised in that** said eccentric (4) comprises at least one separate bearing shell (5) in the bearing zone against said antifriction bearing (9).

2. Disc brake according to Claim 1, **characterised in that** each bearing shell (5) is configured as moulded sheet metal part.

3. Disc brake according to Claim 1 or 2, **characterised in that** each bearing shell (5) is either positively connected to said eccentric (4) or joined to it by material.

4. Disc brake according to any of the preceding Claims, **characterised in that** said bearing shell (5) is joined to said eccentric (4) by adhesive bonding or by soldering.

5. Disc brake according to any of the preceding Claims, **characterised in that** locking projections (11) are integrally moulded on said bearing shell (5) which engage into said eccentric (4) for locking.

6. Disc brake according to any of the preceding Claims, **characterised in that** readjustment pins (7) are integrally moulded on said bearing shell (5) in correspondence with a readjusting means.

7. Disc brake according to any of the preceding Claims, **characterised in that** restoring means (8) are integrally moulded for restoring an antifriction bearing cage (10)..

8. Disc brake according to Claim 7, **characterised in that** said restoring means (8) are configured as tabs bent in a direction towards said antifriction bearings (9).

9. Disc brake according to any of the preceding Claims, **characterised in that** each bearing shell (5) is moulded by hot/cold calibration.

## Revendications

1. Frein à disque, en particulier pour un véhicule utilitaire, comprenant un moyen de serrage de frein disposé dans un étrier de frein (1), moyennant duquel une garniture de frein peut se presser contre un disque de frein au cas de serrage du frein, et un levier rotatif (3) pivotable ayant une extrémité configurée sous forme d'un excentrique (4), dans lequel ledit excentrique (4) s'appuie, en tant que contre-appui, à une siège de logement (10) dudit étrier de frein (1) moyennant au moins un palier à roulement (9) apte à être porté, via un moyen de rappel de cage (8) dudit levier rotatif, **caractérisé en ce que** ledit excentrique (4) comprend au moins une coquille de coussinet (5) séparée dans la zone d'appui contre ledit palier à roulement (9).

2. Frein à disque selon la revendication 1, **caractérisé en ce que** chaque coquille de coussinet (5) est configurée sous forme d'une pièce préformée en tôle.

3. Frein à disque selon la revendication 1 ou 2, **caractérisé en ce que** chaque coquille de coussinet (5) est reliée audit excentrique (4) de façon positive ou par matériau.

4. Frein à disque selon une quelconque des revendications précédentes, **caractérisé en ce que** ladite coquille de coussinet (5) est reliée audit excentrique (4) par collage ou par brasage.

5. Frein à disque selon une quelconque des revendications précédentes, **caractérisé en ce que** des saillies d'arrêt (11) sont formées intégralement à ladite coquille de coussinet (5) pour prise dans ledit excentrique (4) au but d'arrêt.

6. Frein à disque selon une quelconque des revendications précédentes, **caractérisé en ce que** des chevilles de réglage (7) sont formées intégralement à ladite coquille de coussinet (5) en correspondance avec un moyen de réajustage.

7. Frein à disque selon une quelconque des revendications précédentes, **caractérisé en ce que** des moyens de rappel (8) sont formés intégralement pour rappeler un palier à roulement cage (10)..

8. Frein à disque selon la revendication 7, **caractérisé en ce que** lesdits moyens de rappel (8) sont configurés sous forme de languettes pliées en une direction vers lesdits paliers à roulement (9).

9. Frein à disque selon une quelconque des revendications précédentes, **caractérisé en ce que** chaque coquille de coussinet (5) est formée par calibrage à chaud/froid.
